# EUROPÄISCHE PATENTANMELDUNG

(11) **EP 1 036 626 A2**
(43) Veröffentlichungstag der Anmeldung: **20.09.2000**
(21) Anmeldenummer: 00104319.9
(22) Anmeldetag: 02.03.2000
(51) Int. Cl.: B23K 1/015

(54) **Verfahren zum Reflow-Löten in einer Dampfphasenvakuumlötanlage**

(30) Priorität: 17.03.1999 DE 19911887
(71) Anmelder: Asscon Systemtechnik Electronik GmbH, 86343 Königsbrunn (DE); Augustin, Karlheinz, 90768 Fürth (DE)
(72) Erfinder: Zabel, Claus, 86199 Augsburg (DE); Augustin, Karlheinz, 90768 Fürth (DE)

(57) **Zusammenfassung**

Es wird ein Verfahren für ein Reflow- Löten in einer Dampfphasenlötanlage mit einem kontinuierlichen Durchlauf im Schrittbetrieb bzw. für einen reinen Stationsbetrieb vorgestellt. Das Lötgut durchläuft eine Zuführstation zum Bestücken, eine Trocknungsstation in einer durch Schleusen verschlossenen Kammer, den eigentlichen Rezipienten, eine Kühlschleuse und ein Entstückungsmodul, wahlweise ist ein Reinigungsmodul direkt ankoppelbar.

Die Erfindung beinhaltet eine Weiterentwicklung des Dampfphasenlötverfahrens, was sich im Aufbau des Rezipienten zeigt. Zur Lötung im Rezipienten dient eine teilweise mit einer inerten organischen Verbindung gefüllte Dampfphasenkammer. Dem Rezipienten wird das zu lötende Gut im getakteten Durchlaufbetrieb schrittweise zugeführt. Das zu lötende Gut wird in der Dampfphase durch die siedende inerte organische Verbindung auf Temperaturen oberhalb des Schmelzpunktes des Lotes erhitzt und nach Anheben des Lötgutes auf Zonen oberhalb der Dampfphase wird ein anschließendes Evakuieren bei Temperaturen noch oberhalb der Lotschmelze durchgeführt.

## Beschreibung

Die Erfindung beschreibt ein Verfahren zum Reflow- Löten in einer Dampfphasenlötanlage nach den Merkmalen des Oberbegriffes des Anspruches 1. Dampfphasenlötanlagen und Verfahren des Reflow- Lötens sind mehrfach aus der Literatur bekannt.

Die Fachliteratur unterscheidet verschiedene Lötverfahren zur Herstellung stoffbündiger ohmscher und/oder thermischer Kontakte. Selbst im Reparatursektor sind die Zeiten der Lötkolbenlötung Vergangenheit.

Das Schwallöten von Leiterplatten ist großtechnisch am weitesten entwickelt, jedoch in vielen Fällen der Herstellung elektrisch gut leitender und mechanisch stabiler Verbindungen eine nicht mehr geübte Technologie. Löten unter Schutzgas, in 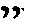 Reflow- Öfen" und IR- Lötanlagen sind bestimmend für den Stand der Technik. In gleicher Weise werden Dampfphasenlötanlagen dem Stand der Technik zugeordnet. Saubere Lötverbindungen werden nach dem neuesten Stand der Technik in Kammeröfen unter Schutzgasatmosphäre und Einbeziehen des Vakuums in der Schmelzphase des Lotes erreicht, negativ sind hier das nennenswerte Überfahren der Schmelztemperatur und der diskontinuierliche Stationsbetrieb zu bewerten.

DE 38 14 870 C1 beschreibt einen erfindungsrelevanten Stand der Technik unter dem Titel 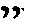 Verfahren und Vorrichtung zum Behandeln von Gegenständen in einem einzigen gas- und/oder dampfförmigen Medium, insbesondere zum Dampfphasen- Löten von Gegenständen". Die Entwicklung der Dampfphasenlötung wird daselbst dargestellt, wobei sich jene Erfindung die Aufgabe gestellt hatte, einen Austritt des Dampfes zuverlässig zu vermeiden und damit den Einsatz eines zweiten, abschirmenden Mediums zu umgehen.

In DE 196 02 312 A1 wird ein Verfahren zur Verbindung von Gegenständen mit metallischen Werkstoffen vorgestellt, bei dem die für den Weichlötvorgang erforderliche Wärmemenge mittels eines Fluids übertragen wird. Die Anwendung in dem dortigen erfinderischen evakuierbaren Rezipienten (bis auf 200 mbar) war für die Lösung der eigenen Aufgabenstellung ungeeignet, da nicht die erforderliche Temperaturkonstanz unter vermindertem Druck möglich ist.

In gleicher Weise entspricht US 4,392,049 dem Stand der vergleichbaren Technik. In beiden Vorveröffentlichungen werden mittels Evakuierungen des Reaktionsraumes Lötprozesse im Reflow- Verfahren vorgenommen.

Mit dem Fortschritt in der Chemie der Herstellung temperaturstabiler und inerter organischer Verbindungen wächst das Interesse, solche Verbindungen in Form ihrer Dampfphase für temperaturstabile Prozesse zu nutzen. Die Dampfphasenlötung wird technisch besser handhabbar.

In einem 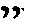 know how- Seminare in Sachen Löten" wird von A. Rahn 1993 ein guter Überblick auch des Reflow- Lötens in der Dampfphase gegeben (Ersa: 12.10.93, 97877 Wertheim, S. 71ff). Geeignete stabile Perfluor- Verbindungen werden vorgestellt und diskutiert. Die Stabilität solcher organischer Verbindungen konnte in den letzten Jahren erheblich verbessert werden.

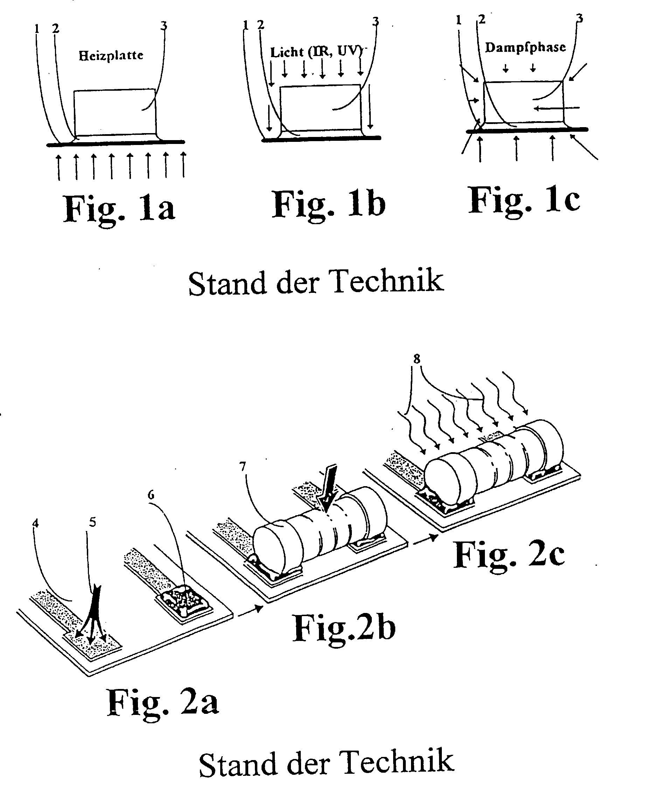

Die Figuren 1 und 2 erläutern den Stand der Technik.
**Fig. 1** skizziert die Unterschiede der Zufuhr der Lötenergie an die Lötstelle.
**Fig. 2** zeigt den Verfahrensablauf des Reflow- Lötens nach A. Rahn.

**Fig. 1** skizziert die Unterschiede der Zuführ der Lötenergie an die Lötstelle. Unabhängig von der Lötmethode ist die Wärmezufuhr entscheidend für die Ausbildung der Lötstelle. Beim Heizplattenlöten, wie in **Fig. 1a** dargestellt, wird die Temperaturerhöhung (Pfeile) ausschließlich von der Lötunterlage (1), beispielhaft eine Kupferschicht, an die Lötstelle befördert. Das zu lötende Gut (3) erhitzt sich zeitlich später als das Lot (2) auf Temperaturen oberhalb der Schmelztemperatur.

Bei großflächigen Lötstellen schmilzt das Lot (2) zunächst an den Umrandungen des Lötgutes (3), eine qualitativ gute Lötstelle kann hier nur durch mechanischen Druck oder durch drückende Bewegungen des Lötgutes (3) erzielt werden. Solche Verfahren sind deshalb wenig automatisierungsfreundlich.

**Fig. 1b** zeigt das klassische Lichtlöten. Durch die Pfeile ist die Hauptlichtrichtung angedeutet. Abgesehen von sehr hohen Temperaturgradienten ist hier das Lötgut (3) den größten Temperaturbelastungen ausgesetzt. Hier nicht zu diskutierende Unterschiede bestehen in der Art des angewendeten Lichtes, Licht mit Wellenlängen im sichtbaren Bereich ist dabei eingeschlossen. Bei Lötgut mit wärmeisolierenden Eigenschaften oder Schutzüberzügen kann das Erfordernis der Überhitzung beachtlich sein.

Auch mit dieser Methode erfolgt in jedem Falle bei großflächigen Lötungen zunächst eine Erhitzung der Umrandung des Lötgutes (3). Hier wird die Lötunterlage (1) in den Positionen unterhalb des Lötgutes und das Lot (2) selbst in gleicher Position relativ spät den Erweichungs- oder Schmelzpunkt des Lotes erreichen.

Bei sehr gut lötenden Materialien, wie beispielhaft Silber, wird sich sofort an der Umrandung des Lötgutes das Lot (3) mit dem Silber des Lötgutes (2) verbinden und die Luft sowie auch alle anderen löthemmenden Stoffe können wegen der Oberflächenspannung nicht mehr aus der Lötstelle entweichen, Lunker sind die vorprogrammierte und systematische Folge.

Eine allseitige Erwärmung der Lötstelle, mit Unterlage (1), Lot (2) und Lötgut (3) wird in erhitztem Gas oder in der Dampfphase eines Soxletts erreicht. Hier ist der Temperturgradient ausschlaggebend für die Lötergebnisse. Bei genügend geringem Gradienten können sich alle am Lötprozess beteiligten Komponenten gleichmäßig gut bis zu der eingestellten Löttemperatur erhitzen. Ein zu großer Gradient kann sehr schnell eine gute Lötqualität verhindern. Bei optimierter Temperaturerhöhung, die von der geometrischen Gestaltung der Lötkomponenten abhängig ist, bildet sich um das Lot (2) und alle am Lötprozess beteiligten Komponenten, Lötunterlage (1) und Lötgut (3), ein Gasfilm unter Verdrängung des Luftsauerstoffes aus.

Der Gasfilm besteht beim Schutzgaslöten beispielhaft aus Formiergas und bei der Soxlettlötung aus der Dampfphase des energietragenden Mediums, hier beispielhaft Perfluorpolyether. Während der Wasserstoff des Formiergases auf Oxidschichten reduzierend wirken soll, was nur bei überhöhten Löttemperaturen der Fall ist, benetzt der Dampf des Polyethers die gesamte Oberfläche oberhalb seiner Siedetemperatur und setzt bei dieser Temperatur die Oberflächenspannung des Lotes herab.

**Fig. 2** zeigt den Verfahrensablauf des Reflow- Lötens, wie er bei A. Rahn (ebenda) veröffentlicht wurde. **Fig. 2a** skizziert einen Ausschnitt eines Trägerkörpers, einer Platine (4) aus elektrisch isolierendem Material (deren Wahl richtet sich nach den Erfordernissen der thermischen Leitfähigkeit, es besteht entweder aus organischen Kunststoffen mit Füllstoffen oder aus anorganischen Oxiden, wie beispielhaft Aluminiumoxid) mit einer strukturierten Kaschierung, insbesondere aus Kupfer mit möglichen galvanischen Überzügen und möglichen partiellen lotabweisenden Abdecklacken.

Auf den Patinen (4) befinden sich nach schaltungstechnischen Bedürfnissen Flächen (5), die für Löt- und/oder Bondverbindungen entsprechend angeordnet sind. Die für Lötverbindungen vorgesehenen Flächen werden bei der Anwendung des Reflow- Verfahrens mit der Lotpaste (6) überdeckt, wobei die Lotpastenmenge durch Siebdruck über Sieb (oder Maske bei dickeren Schichterfordenissen) aufgetragen wird.

**Fig. 2b** gibt den Aufbau eines Widerstandes (7) oder eines ähnlichen elektrischen Bauteiles bekannt. Auf zwei mit Lotpaste (6) versehenen Lötstellen wird das Bauteil (7) aufgeklebt. Die Klebkraft ist dabei für das Fixieren jedes Bauteiles ausreichend.

In **Fig. 2c** ist die Wärmeeinwirkung (8) angedeutet. Das Lot (6) schmilzt, flüchtige Bestandteile entweichen und das in der Lotpaste enthaltene Flussmittel überdeckt die Lotoberfläche. Bei Verwendung von Perfluorpolyether als Dampfphase erfolgt keine Überhitzung der Lötstellen, wenn der normale Umgebungsdruck aufrecht erhalten bleibt, die flüssige und gasförmige Phase des Polyethers im thermischen Gleichgewicht gehalten wird und der Polyether im Siedepunkt nach der gewünschten Löttemperatur richtig gewählt war.

Der Einsatz von Perfluorpolyethern als Fluid für Reflow- Lötanlagen wird in EP 0 326 539 A1 beschrieben. Hier ist eine gute Übersicht der für Lötprozesse geeigneten Lösemittel gegeben.

Es wurden Perfluorpolyether hergestellt, die zu den stabilsten organischen Verbindungen überhaupt gerechnet werden dürften. Die Stabilität beinhaltet dabei auch die Dampfphase der Verbindungen bei Siedepunkten bis zu 270°C, das ist ausreichend, um alle im Einsatz befindlichen gängigen Lote schmelzen zu können. Die Stabilität der fluororganischen Verbindungen werden durch deren inertes Verhalten gegenüber allen Chemikalien, Metallen sowie Kunststoffen und anderen organischen und anorganischen Produkten begründet.

Beispielhaft werden im folgenden Perfluorpolyether als Grundlage für die eigene erfinderische Lösung herangezogen. Die flüssigen Polymere dieser Verbindungsreihe können mit ihren unterschiedlichen Kettenlängen einen Temperaturbereich von 55°C bis 270°C im Siedepunkt bestreichen. Durch die richtige Wahl des gewünschten Siedepunktes kann ein sanftes Löten ohne Überfahren der Löttemperatur mit allen dabei möglichen negativen Folgen der Bildung von unbekannten und sehr schlecht zu entfernenden Krackprodukten erarbeitet werden.

Weiterhin wird das aus dem Stand der Technik bekannte 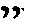 Reflow- Verfahren" ausgewählt, um die Zielparameter der Lötqualität zu erreichen. Das Reflow- Löten ist zwischenzeitlich durch den technischen Gebrauch definiert als:

Das Aufbringen von Lotpaste auf die Lötstelle mit anschließendem Fixieren des zu lötenden Bauteils und abschließendem Erhitzen dieser Stelle bis zu Temperaturen oberhalb der Lotschmelztemperatur.

Auf der Grundlage dieser Definition spricht man von 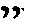 Reflow- Verfahren", 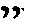 Reflow- Öfen" und 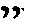 Reflow- Löten". Dieses Lötverfahren ist die zweite Grundlage zur Erreichung der Ziele der vorliegenden Erfindung.

Die vorliegende Erfindung hat sich die Aufgabe gestellt, eine fehlerfreie, hochproduktive und wirtschaftlich günstige Lotverbindung für höchste Ansprüche in der elektronischen Industrie vorzustellen, die alle dem Stand der Technik im einzelnen anhaftenden Fehler ausschließt.

Die Aufgabe wird mit einer erfinderischen Anlage und einem dazugehörigen Verfahren der darzustellenden Art durch die Maßnahmen des kennzeichnenden Teiles des Anspruches 1. gelöst, bevorzugte Weiterbildungen werden in den Unteransprüchen beschrieben.

Das Erreichen der erforderlichen optimalen Qualität ist bei allen bisherigen Ausrüstungen und Verfahren nach dem Stand der Technik gehemmt. Das Löten in Durchlauföfen unter Schutzgas birgt in sich die Wahrscheinlichkeit der Lunkerbildung in den Lotflächen, eine Dejustage der Sollpositionen und eine Überhitzung der Lötstellen im Löttemperaturscheitelpunkt. Das Löten in Kammeröfen mit Evakuieren im Löttemperaturscheitelpunkt ergibt von den Positionen des Lötgutes abhängig unterschiedliche Qualitäten, ein Erhöhung der Temperatur deutlich über den Schmelzpunkt des Lotes ist erforderlich.

Das Reflow- Löten ist technologisch in der Zwischenzeit so weit ausgereift, dass es den vorgenannten Verfahren überlegen ist. Dennoch zeigen sich in der Praxis erhebliche Fehlerquellen. Der Nachteil der Verwendung von Flussmittel, das bei den Schutzgaslöteinrichtungen (Durchlauf- und Kammeröfen) nicht erforderlich ist, ist Hauptursache für Qualitätsmängel. Einerseits wird durch zu schnelles Aufheizen Lotpastenmasse oder werden deren Inhaltsstoffe in die Nachbarbezirke verspritzt und andererseits werden durch Überfahren der notwendigen Löttemperatur undefiniert und teilweise schlecht zu entfernende Krackprodukte aus der Lotpaste oder deren Inhaltstoffe hergestellt.

Zur Vermeidung von Lunkern oder Blasen in der Benetzungsfläche wird auch bei dem Reflow- Löten teilweise Vakuum eingesetzt. Das Verdampfen von Lotinhaltsstoffen oder deren Krackprodukte verursacht erhebliche Ablagerungen in den Rezipienten und Vakuumleitungen neben dem 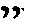 Verkleben" von Lötgut, wodurch Mehraufwendungen und Nacharbeiten zur Säuberung feste Bestandteile dieser Technologien werden.

Bei Lichtlötanlagen einschließlich IR- und UV- Anlagen sind durch unterschiedliche partielle Reflexions- bzw. Absortionsflächen des Lötgutes stark unterschiedliche Temperaturen in verschiedenen Lötregionen vorzufinden, was Spaltprodukte der Flussmittel mit sehr schlechten Löseeigenschaften bei nachträglichen Säuberungsschritten zur Folge hat. In den Lotbenetzungsgebieten sind solche Spaltprodukte sehr oft in solch einem Umfang vorhanden, dass keine zuverlässige Qualität des Lötgutes erreicht werden kann.

Zur Lösung der eigenen Aufgabenstellung hat sich das Dampfphasenlöten mit den aus dem Stand der Technik bekannten Anlagen am geeignetsten herausgestellt. Solche Anlagen können als Durchlaufanlagen konzipiert werden, sind aber in gleicher Weise für einen Stationsbetrieb als Chargenanlage herstellbar. Bei Verwendung des bereits erwähnten Perfluorpolyethers entsprechender Siedetemperatur ist eine Lösung nach der erfinderischen Aufgabenstellung möglich. Bedingt durch die chemische Stabilität, elektrische Inertheit, seine vorzügliche Materialverträglichkeit, der sehr guten Warmeübertragung und einer biologischen Unbedenklichkeit besitzen perfluorierte Polyether gegenüber anderen Medien nennenswerte Vorzüge zur Durchsetzung der eigenen Aufgabenstellung.

Mit dem Einsatz eines perfluorierten Polyethers als Lötmedium ergeben sich weitere Vorzüge. Ein sehr guter Wärmeübergang sorgt für eine gute Arbeitsgeschwindigkeit und die hohe Dampfdichte ermöglicht es, ohne Schutzgasatmosphäre arbeiten zu können, denn der in der flüssigen Phase des Perfluorpolyethers in Größenordnungen gelöste Sauerstoff wird in der Dampfphase aus der viel schwereren Sphäre quantitativ herausgetrieben.

Der Vorteil der Dampfphasenlötung liegt jedoch in der Tatsache, dass der Dampf bei eingestelltem Druck immer eine gleichbleibende Temperatur besitzt. Wählt man also eine bestimmte Fraktion aus der Gruppe der perfluorierten Polyether, dann ist man sicher, dass kein Überfahren des gewählten Temperaturniveaus auftritt.

Das hat hervorragende Bedeutung auf die Lösbarkeit aller Addititve der im Reflow- Verfahren verwendeten Lotpaste. Das Flussmittel der Lotpaste liegt bei der Wahl einer wasserlöslichen Zusammensetzung nach der Temperaturbehandlung immer noch in wasserlöslicher Form vor, es haben sich keine Krackprodukte gebildet, die wasserunlöslich sind.

Bei Einsatz von Dampfphasenlötanlagen nach dem Stand der Technik war jedoch die erfinderische Zielstellung dennoch nicht lösbar, denn die Gefahr der Lunkerbildung bei flächigen Lötstellen ist in Abhängigkeit von der Größe der Lötfläche vorhanden. Durch Einschluss von Bestandteilen der Lotpaste oder Aerosolen aus der Dampfphase des Lötmediums sind Lunker vorprogrammiert, sie stellen einen systematischen potentiellen Fehler in der Qualität dar.

Die hervorragenden Ergebnisse aus der Kammerofenlötung mit Evakuieren des Rezipienten in der Schmelzphase des Lotes sollen erfinderisch in einer Dampfphasenlötanlage genutzt werden. Durch das Zusammenwirken dieser zwei an sich bekannten Verfahren ist ein erstaunlicher Effekt erzielt worden. Wird das gelötete Gut bei einer Temperatur oberhalb des Schmelzpunktes des Lotes aus der Dampfphase gehoben und bei diesem Temperaturniveau, bei Verzögerung der zu diesem Zeitpunkt beginnenden Abkühlung, einer sofortigen Vakuumbehandlung zugeführt, dann werden alle flüchtigen Stoffe, einschließlich des Dampfes der perfluorierten Polyether, aus den Lötstellen abgesaugt.

Dieser Effekt ist neben dem Effekt der Abschirmung der Lötstellen durch einen Film des inerten Lötmediums gegen oxidative Verkrustungen dafür in Betracht zu ziehen, dass eine lunkerfreie Lötung selbst großflächiger Lötstellen durchgeführt werden kann. Die technische Ausführung dieser Idee führt schließlich zu der erfinderischen Lösung in Form einer Anlage und eines Verfahrens zum Dampfphasenvakuumlöten.

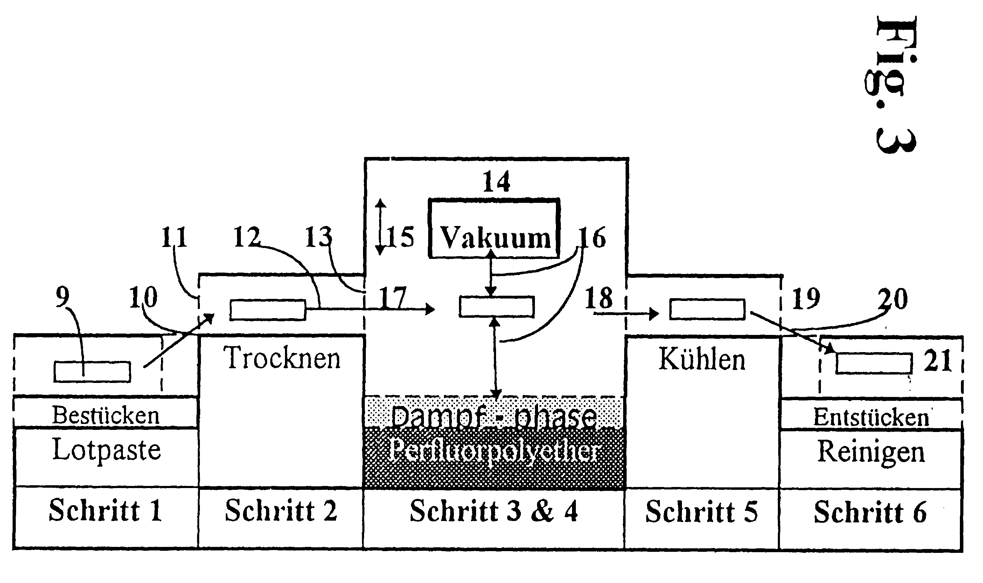

**Fig. 3** veranschaulicht schematisch die erfinderische Dampfphasenvakuumlötanlage. Das Verfahren arbeitet nach dem Prinzip des Reflow- Lötens. Dazu wird Lotpaste partiell auf das Substrat aufgebracht. Diese Arbeiten werden nach dem Stand der Technik sehr rationell vom Eingangsvorrat automatisch über die Druckstation zum Ausgangsvorrat (9) verrichtet.

Die mit Lotpaste bedruckten und mit zu lötenden Bauteilen bestückten Substrate werden auf Träger gelegt und durch diese in die Trockenkammer (10) transportiert, dazu ist eine Schleuse (11) zu durchfahren. In dieser Schleuse (11) kondensiert das aus dem Rezipienten verschleppte Perfluorpolyether und es wird durch Vorwärmen gleichzeitig die Trocknung der Lotpaste von den in ihr enthaltenen Lösemitteln erreicht.

Von dem Schritt 2 gelangen die getrockneten und vorgewärmten Substrate auf den Trägern über eine Zubringerstation (12) und eine Schleuse (13) in den Schmelzraum, dem eigentlichen Lötraum (17). Hier übergibt der Substratträger das Substrat an eine Hebe-/Senkvorrichtung (16). Zunächst wird das Substrat in die Dampfphase des Perfluorpolyethers gesenkt, wobei die Vorrichtung (16) und das zu lötende Substrat die Dampftemperatur annehmen. Die Wahl des Perfluorpolyethers ist darauf gerichtet, dass der Schmelzpunkt des Lotes aus der Lotpaste um ca. 10°C bis 15°C überschritten wird.

Die Formgestaltung der Hebe-/Senkvorrichtung (16) ist auf eine relativ große Wärmekapazität der Auflagefläche für das Substrat gerichtet. Dadurch ist es möglich, die Lötstellen beim Anheben der Hebe-/Senkvorrichtung (16) in flüssiger Form zu halten. Nach dem Anheben der Hebe-/Senkvorrichtung (16) in die obere Position, die mit Sicherheit oberhalb der Dampfphase liegt, wird mittels Vakuumglocke (14), die durch eine Hubbewegung (15) in die untere Position abgesenkt wird, Vakuum an das Lötgut angelegt.

Gaseinschlüsse und gasförmiges Perfluorpolyether verdampfen noch in der Flüssigphase des Lotes. Weiterhin wird noch in der Flüssigphase des Lotes der Vakuumrezipient mit Stickstoff beflutet, wodurch schließlich in der Endphase des Beflutens der Schmelzpunkt des Lotes unterschritten wird.

Damit sind die Verfahrensschritte 3 und 4 abgeschlossen und das gelötete Gut kann von einem nachfolgenden Träger (18) übernommen und über die Ausschleusung in die Abkühlphase (Schritt 5) verbracht werden.

Über eine Schleuse (19) wird das gelötete Gut mittels Zuführer (20) direkt entstückt oder der abschließenden Reinigung (21) zugeführt Bei einer beispielhaften Verwendung wasserlöslicher Lotpasten gibt das erfinderische Verfahren erstmals die Möglichkeit, sämtliche Rückstände auf den Platinen ausschließlich mit entionisiertem Wasser zu entfernen und einfach zu trocknen.

Die Vakuumphase im Schritt 4 ermöglicht es, großflächige Lotverbindungen lunkerfrei auszuführen. Teste haben ergeben, dass eine hervorragende Qualität beim Löten bewirkt werden kann. Das Zusammenwirken des inerten Gases in der Dampfphase des Perfluorpolyethers mit der Oberfläche aller zu lötenden Teile und das anschließende Evakuieren führen zu einer überraschenden Lösung der gestellten Aufgabe.

## Patentansprüche

1. Verfahren zum Reflow- Löten in der Dampfphase mittels eines inerten Mediums, bestehend aus den folgenden Verfahrensschritten:
a) Einbringen des Lötgutes in die geschlossene Anlage über eine Schleuse (11),
b) Trocknen des Lötgutes in einer Vorkammer (12),
c) Zuführen des Lötgutes in den eigentlichen Reaktionsraum (17) und Erhitzen mittels des Dampfes des inerten organischen Mediums auf Temperaturen oberhalb des Schmelzpunktes des Lotes,
d) Anheben des Lötgutes in dem Reaktionsraum (17) in dem erhitzten Zustand in die Zone oberhalb der Dampfphase des organischen Mediums,
e) Evakuieren des Lötgutes in dem in der Anlage eingebauten Rezipienten (14) bei Temperaturen noch oberhalb des Schmelzpunktes des Lotes,
f) Aufheben des Vakuums des Rezipienten (14) bei Temperaturen noch oberhalb des Schmelzpunktes des Lotes und Abkühlen mittels eines in dem Rezipienten eingebauten Kühlers und
g) Ausschleusen des Lötgutes aus der geschlossenen Anlage.

2. Verfahren nach Anspruch 1, dadurch gekennzeichnet, dass
das Lötgut in dem Rezipienten auf einem Träger aus Metall als Wärmespeicher oder einer Heizplatte positioniert ist und die Trägerplatte in vertikaler Richtung gehoben und gesenkt werden kann.

3. Verfahren nach Anspruch 1, dadurch gekennzeichnet, dass
das inerte organische Medium eine Siedefraktion aus der homologen Gruppe der Perfluorpolyether mit einem Siedepunkt zwischen 55°C und 270°C, der jedoch höher als der Schmelzpunkt des Lotes der für das Reflow- Löten eingesetzten Lotpaste ist.

4. Verfahren nach Anspruch 1, dadurch gekennzeichnet, dass
für den Rezipienten in der Dampflötanlage eine Vakuumreserve in Form eines Behälters mit verringertem Druck eingebaut ist, um ein rasches Evakuieren der in dem Rezipienten positionierten Vakuumkammer zu realisieren.

5. Verfahren nach Anspruch 1, dadurch gekennzeichnet, dass
das zu lötende Gut einerseits aus einer zumindest teilweise strukturierten metallkaschierten Platine aus anorganischen Oxiden bzw. Nitriden oder organischen mit Füllstoffen versehenen Verbindungen und andererseits aus elektronischen Bauelementen oder Verbindungsteilen besteht.

6. Verfahren nach Anspruch 1, dadurch gekennzeichnet, dass
das zu lötende Gut einerseits aus einer metallischen Komponente und andererseits aus einem mit elektrischen und/oder elektronischen Bauelementen bestückten Isoliersubstrat als Halbfabrikat besteht, die durch Lötverbindung stoffschlüssig miteinander zu verbinden sind.
